# EUROPEAN PATENT APPLICATION

(11) **EP 4 760 971 A1**
(43) Date of publication of application: **17.06.2026**
(21) Application number: 24901045.5
(22) Date of filing: 04.12.2024
(51) Int. Cl.: H01M 50/609, G05B 19/418

(54) **PROCESS MANAGEMENT DEVICE AND OPERATION METHOD THEREOF**

(30) Priority: 06.12.2023 KR 20230175255
(71) Applicant: LG Energy Solution, Ltd., Seoul 07335 (KR)
(72) Inventor: KANG, Chan Woo, Daejeon 34122 (KR); KIM, Hoon Sik, Daejeon 34122 (KR); PARK, Jeong Hyun, Daejeon 34122 (KR); SIM, Jae Seung, Daejeon 34122 (KR)
(74) Representative: BCKIP Part mbB
(86) International application number: PCT/KR2024/019665
(87) International publication number: WO 2025/121859

(57) **Abstract**

According to an embodiment disclosed herein, a process management device may include an injection device configured to inject an electrolyte to battery cells provided in a pallet, and a controller configured to correct an injection amount of electrolyte injected into each of the battery cells based on a non-operation time of the injection device and the number of pallets for which injection is completed after the start of the injection of the electrolyte.

## Description

### TECHNICAL FIELD

### CROSS-REFERENCE TO RELATED APPLICATION

This application claims priority to and the benefit of Korean Patent Application No. 10-2023-0175255 filed in the Korean Intellectual Property Office on December 6, 2023, the entire contents of which are incorporated herein by reference.

### TECHNICAL FIELD

Embodiments disclosed herein relate to a process management device and a method of operating the same.

### BACKGROUND ART

Recently, research and development on secondary batteries has been actively conducted. Here, the secondary battery is a battery capable of charging and discharging and may be construed as including all recent lithium ion batteries such as conventional Ni/Cd batteries and Ni/MH batteries. Among secondary batteries, lithium ion batteries may have a higher energy density than conventional Ni/Cd batteries, Ni/MH batteries, etc. and may be manufactured in a compact and lightweight manner, and thus may have high usability in terms of power sources for mobile devices. Recently, the lithium-ion batteries are attracting attention as a next-generation energy storage medium as a range of use expands to a power source for an electric vehicle.

The process of manufacturing a secondary battery includes an electrolyte injection process, and when a correct amount of electrolyte is not injected during the electrolyte injection process, defects can occur due to leakage or shortage of an electrolyte.

### DISCLOSURE

### TECHNICAL PROBLEM

Embodiments disclosed herein are directed to providing a process management device and a method of operating the same, which prevent shortage of an amount of electrolyte injected into each battery cell.

Technical objects of embodiments disclosed herein are not limited to the above-described objects, and other objects that are not described will be able to be clearly understood by those skilled in the art from the following descriptions.

### TECHNICAL SOLUTION

According to an embodiment disclosed herein, a process management device may include an injection device configured to inject an electrolyte to battery cells provided in a pallet, and a controller configured to correct an injection amount of electrolyte injected into each of the battery cells based on a non-operation time of the injection device and the number of pallets for which injection is completed after the start of the injection of the electrolyte.

According to an embodiment, the controller may perform the correction when the non-operation time of the injection device is a first time or longer and until the number of pallets for which injection is completed reaches a preset value.

According to an embodiment, the preset value may be set to the number of pallets included in one cycle in which the injection device injects the electrolyte.

According to an embodiment, the controller may add the injection amount of electrolyte by a first value when the non-operation time of the injection device is the first time or longer and shorter than a second time.

According to an embodiment, when the non-operation time of the injection device is a second time or longer, the controller may correct the injection amount of electrolyte based on the number of pallets for which the injection is completed.

According to an embodiment, the controller may be configured to add the injection amount of electrolyte by a second value when the number of pallets for which the injection is completed is less than a first number, and add the injection amount of electrolyte by a third value when the number of pallets for which the injection is completed is the first number or more and less than the preset value.

According to an embodiment, the injection amount of electrolyte to be corrected may be determined based on the non-operation time of the injection.

According to an embodiment disclosed herein, a process management method may include acquiring a non-operation time of an injection device configured to inject an electrolyte to battery cells provided in a pallet, and correcting an injection amount of electrolyte injected into each of the battery cells based on the non-operation time of the injection device and the number of pallets for which injection is completed after the start of the injection of the electrolyte.

According to an embodiment, the correcting of the injection amount of electrolyte may include performing the correction when the non-operation time of the injection device is a first time or longer and until the number of pallets for which injection is completed reaches a preset value.

According to an embodiment, the correcting of the injection amount of electrolyte may include adding the injection amount of electrolyte by a first value when the non-operation time of the injection device is the first time or longer and shorter than a second time.

According to an embodiment, the correcting of the injection amount of electrolyte may include correcting the injection amount of electrolyte based on when the non-operation time of the injection device is a second time or longer and the number of pallets for which the injection is completed.

According to an embodiment, the correcting of the injection amount of electrolyte may include adding the injection amount of electrolyte by a second value when the number of pallets for which the injection is completed is less than a first number; and adding the injection amount of electrolyte by a third value when the number of pallets for which the injection is completed is the first number or more and less than the preset value.

### ADVANTAGEOUS EFFECTS

According to the process management device and the method of operating the same according to the embodiments disclosed herein, it is possible to prevent shortage of an electrolyte injected into each battery cell, thereby reducing the defect rate.

In addition, various effects that can be directly or indirectly identified through the present document can be provided.

### DESCRIPTION OF DRAWINGS

FIG. 1 is a block diagram illustrating a process management device according to one embodiment disclosed herein.
FIG. 2 is a view illustrating a relationship between a non-operation time and a reduced amount of injection according to one embodiment disclosed herein.
FIG. 3 is a view illustrating an example of a result of adopting a correction method according to one embodiment disclosed herein.
FIG. 4 is a flowchart for describing a process management method according to one embodiment disclosed herein.
FIG. 5 is a flowchart for describing a process of correcting an injection amount of electrolyte according to one embodiment disclosed herein.
FIG. 6 is a block diagram illustrating a hardware configuration of a computing system for performing a method of operating a process management device according to one embodiment disclosed herein.

### MODE FOR INVENTION

Hereinafter, various embodiments of the present invention will be described with reference to the accompanying drawings. However, it should be understood that this is not intended to limit the present invention to specific embodiments and includes various modifications, equivalents, and/or alternatives of the embodiments of the present invention.

The singular form of a noun corresponding to an item in this document may include one item or a plurality of items unless the relevant context clearly dictates otherwise. In this document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. The terms such as "first," "second," "first," or "second" may simply be used to distinguish the corresponding component from another and do not limit the corresponding components in another aspect (e.g., importance or order). When a certain (e.g., a first) component is described as being "connected," "coupled," or "joined or "coupled" or "connected" to another (e.g., a second) component with or without the terms "functionally" or "communicatively," this means that the certain component may be connected to another component directly (e.g., in a wired manner), in a wireless manner, or through a third component.

Each (e.g., a module or a program) of components described herein may include a single object or a plurality of objects. According to various embodiments, one or more among the above-described corresponding components may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to various embodiments, operations performed by modules, programs, or other components may be executed sequentially, in parallel, repeatedly, or heuristically, or one or more of the operations may be executed in a different order or omitted, or one or more other operations may be added.

As used herein, the term "module," or "part" may include a unit implemented in hardware, software, or firmware and may be used interchangeably with terms such as logic, logic block, component, or circuit. The module may be an integrated part or a minimum unit of the parts or a portion thereof that performs one or more functions. For example, according to one embodiment, the module may be implemented in the form of an application-specific integrated circuit (ASIC).

Various embodiments of this document may be implemented as software (e.g., a program or application) including one or more commands stored in a storage medium (e.g., a memory) that may be read by a machine. For example, a processor of the device may fetch at least one command among one or more commands stored from a storage medium and execute the commands. This allows the device to be operated to perform at least one function according to the at least one fetched command. The one or more commands may include code generated by a compiler or code that may be executed by an interpreter. A device-readable storage medium may be provided in the form of a non-transitory storage medium. Here, "non-transitory storage medium" is a tangible device and only means not including a signal (e.g., electromagnetic waves), and this term does not distinguish between cases in which data is stored semi-permanently and temporarily in the storage medium.

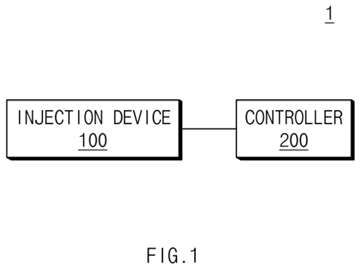

FIG. 1 is a block diagram illustrating a process management device according to one embodiment disclosed herein.

Referring to FIG. 1, a process management device 1 may include an injection device 100 and a controller 200.

The process management device 1 may manage a process of injecting electrolyte into each battery cell in an electrolyte injection process of injecting an electrolyte into the battery cell during a battery manufacturing process.

The process management device 1 can prevent defects caused by an insufficient amount (injection amount) of electrolyte injected into the battery cell, such as during a non-operation time of the injection device 100 or a case in which a cleaning pallet is added in the electrolyte injection process.

In addition, the process management device 1 can maintain the injection amount injected into each battery cell constantly and accurately by correcting the injection amount of electrolyte.

Accordingly, the process management device 1 can prevent defects caused by the insufficient amount of electrolyte injected into the battery cell and increase a yield by reducing a defect rate in the manufacturing process.

In the electrolyte injection process, a pallet is generally used to simultaneously inject an electrolyte into a plurality of battery cells. The pallet may be provided with the plurality of battery cells into which an electrolyte is injected. For example, the plurality of battery cells may be disposed in a matrix on each pallet.

The pallet provided with the battery cells may be inserted into the injection device 100 for injecting an electrolyte. The injection device 100 may inject an electrolyte into the battery cells provided on the pallet.

The injection device 100 may have, for example, a nozzle formed to inject an electrolyte into the battery cells. The injection device 100 may include various known auxiliary devices, including a storage tank in which an electrolyte is stored, a pump for supplying the electrolyte from the storage tank to the nozzle, and the like.

When the pallet is added, the injection device 100 may inject an electrolyte into the plurality of battery cells positioned on the pallet. For example, each battery cell provided on the pallet may have an open upper side, and the nozzle of the injection device 100 may enter the open upper end of each battery cell to inject an electrolyte into the battery cells. In this case, the injection device 100 may be set to inject a predetermined amount of electrolyte.

The injection device 100 may be set to quantitatively inject a predetermined amount of electrolyte into each battery cell. In this case, the actual amount of electrolyte injected into the battery cell can be reduced due to the electrolyte adhered to a surface of the nozzle for injecting an electrolyte, the pipe for supplying the electrolyte from the storage tank, and the like.

In general, the nozzle, the pipe, and the like are formed of a material such as a metal, and as the non-operation time of the injection device 100 increases, surfaces thereof dry out to increase the adhesion of the electrolyte, and thus the amount of electrolyte injected into the battery cell can be further reduced. In this case, the amount of electrolyte injected into the battery cell can be insufficient, thereby causing defects.

Accordingly, the process management device 1 may correct the injection amount of electrolyte considering the non-operation time of the injection device 100. In one embodiment, the controller 200 may correct the injection amount of electrolyte differently depending on the non-operation time of the injection device 100.

The controller 200 may perform overall control of the injection operation of the injection device 100. The controller 200 may correct the injection amount of the electrolyte injected from the injection device 100 into the battery cell.

According to an embodiment, the controller 200 may correct the injection amount of the electrolyte based on the non-operation time of the injection device 100 and the number of pallets in which injection is completed after the start of the injection of the electrolyte.

The controller 200 can acquire the non-operation time of the injection device 100. Here, the non-operation time of the injection device 100 may be a time for which the injection device 100 does not inject an electrolyte. For example, the controller 200 may calculate a difference between a time point at which the operation of the injection device 100 starts (e.g., a time point at which the injection of the electrolyte starts) and a time point at which the previous operation of the injection device 100 is completed (e.g., a time point at which the electrolyte is lastly injected into the pallet) as the non-operation time.

According to an embodiment, the controller 200 may perform the correction when the non-operation time of the injection device is a first time or longer and until the number of pallets for which injection is completed reaches a preset value. The first time may be set experimentally and statistically and set to a time when, for example, the injection amount becomes insufficient due to surface adhesion of the electrolyte.

When a predetermined level of electrolyte is completely injected from the injection device 100, the injection amount of electrolyte is not reduced due to the adhesion of the electrolyte or the like on the surface of the nozzle, the pipe, and the like of the injection device 100, and thus the controller 200 may perform correction until the number of pallets for which injection is completed reaches the preset value.

According to an embodiment, the preset value may be set to the number of pallets included in one cycle in which the injection device 100 injects an electrolyte. For example, an operation cycle of the injection device 100 may be based on the completion of electrolyte injection into a predetermined number of pallets. For example, the injection device 100 may set the completion of the electrolyte injection into battery cells provided in 11 pallets to one cycle, and in this case, the preset value may be set to 11.

Since the injection amount of electrolyte is not reduced due to adhesion of the electrolyte on the surface of the injection device 100 when the electrolyte injection of the injection device 100 elapses one cycle, the controller 200 may not correct the injection amount of electrolyte thereafter.

According to an embodiment, the controller 200 may add the injection amount of electrolyte by a first value when the non-operation time of the injection device 100 is the first time or longer and shorter than a second time. For example, the controller 200 may add the injection amount of electrolyte injected from the injection device 100 to the preset amount by the first value. Here, the second time may have a greater value than the first time.

The controller 200 may add and compensate for the amount of the electrolyte injected to compensate for the decrease in the electrolyte injected into the battery cell due to the non-operation time of the injection device 100.

According to an embodiment, the controller 200 may correct the injection amount of the electrolyte based on the number of pallets for which injection is completed when the non-operation time of the injection device 100 is the second hour or longer.

When the non-operation time of the injection device 100 is the second hour or longer, the reduced amount of electrolyte due to the non-operation time is large, and thus the controller 200 may adjust the compensation amount of electrolyte as the electrolyte injection process progresses without uniformly compensating for the injection amount of electrolyte injected into the added pallets.

According to an embodiment, the controller 200 may add the injection amount of the electrolyte by a second value when the number of pallets for which injection is completed is less than a first number. In this case, the second time may have a greater value than the first time, and thus the second value for correcting the injection amount of electrolyte may be greater than the first value.

According to an embodiment, the controller 200 may add the injection amount of electrolyte by a third value when the number of pallets for which injection is completed is the first number or more and less than the preset value.

In one embodiment, since the loss of the electrolyte through the pipe and the like is reduced through the injection process of the pallet, the third value may be smaller than the second value.

According to an embodiment, the injection amount of electrolyte to be corrected may be determined based on the non-operation time of the injection device 100. For example, the process management device 1 may collect statistics on the reduced amount of electrolyte due to the non-operation time of the injection device 100, and thus determine the correction amount according to the non-operation time. For example, the above first to third values may be set differently according to the non-operation time of the injection device 100.

According to another embodiment, the process management device 1 may determine whether the pallet added to the injection device 100 is a cleaning pallet.

When the pallet is cleaned, as the surface of the pallet dries out like the nozzle, the pipe, and the like of the injection device 100, some of the electrolyte to be injected into the battery cell can be reduced due to adhesion and the like.

Accordingly, the process management device 1 may determine whether a cleaning pallet is injected during the electrolyte injection process into the input pallet and correct the injection amount of electrolyte.

According to an embodiment, the controller 200 may pass an injection chamber and a pressing chamber of the injection device 100 when the pallet added to the injection device 100 is a cleaning pallet. The controller 200 may be first subjected to a preparation process by allowing the cleaning pallet to pass through the injection device 100 without electrolyte injection.

Thereafter, the controller 200 may clean upper and lower portions of the cleaning pallet. Since there is a possibility of foreign substances such as a cleaning liquid during a cleaning process of the pallet, the controller 200 may clean the upper and lower portions of the cleaning pallet.

The controller 200 may control the injection device 100 to inject an electrolyte into the battery cells positioned in the cleaning palette after the cleaning of the cleaning palette is completed.

According to an embodiment, the controller 200 may perform correction during one cycle of the injection device 100. As described above, when the electrolyte injection process of the injection device 100 elapses one cycle, the electrolyte is not reduced due to surface adhesion and the like, and thus the controller 200 may correct the injection amount of electrolyte during one cycle of the injection device 100.

According to an embodiment, the process management device 1 may further include an interface panel (not illustrated) which receives an input of a user. The user may manipulate the interface panel of the process management device 1 to control the electrolyte injection process or check the progress of the process.

For example, the process management device 1 may receive a manipulation input for manipulating the process from the user in a manner such as an input through an input device such as a touch input, a button input, a mouse, or the like and display graphics, UI, and the like, such as a screen which assists to selecting the manipulation input, on the interface panel. According to an embodiment, the interface panel may include a human machine interface (HMI) panel.

According to an embodiment, the interface panel may include a UI for specifying a cleaning palette. A user may perform a manipulation input to the process management device 1 by manipulating the UI of the interface.

According to an embodiment, the controller 200 may perform the presence or absence of a cleaning pallet based on the input of the user. For example, the UI may be a UI for indicating whether the pallet added to the injection device 100 is a cleaning pallet. For example, the user may input a confirmation button indicating that the pallet is a cleaning pallet through the UI of the interface panel or input the number of the cleaning pallet.

The user may input manipulation indicating whether the pallet added to the injection device 100 is a cleaning pallet through the UI, and the controller 200 may receive a signal according to the manipulation input of the user and determine whether the pallet added to the injection device 100 is a cleaning pallet.

According to an embodiment, the correction amount of the injection amount of electrolyte may be set based on a difference in the injection amounts of electrolyte between the cleaning pallet and the uncleaned pallet. The controller 200 may control the injection device 100 to inject the set correction amount added to the preset amount.

The injection amount of electrolyte in each of the cleaning pallet and the uncleaned pallet may be experimentally and statistically confirmed, and for example, the controller 200 may determine that a difference between average injection amounts of the cleaning pallet and the uncleaned pallet is the correction amount.

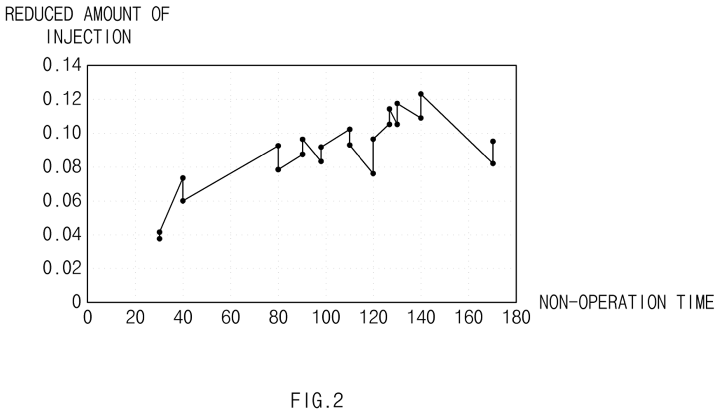

FIG. 2 is a view illustrating a relationship between a non-operation time and a reduced amount of injection according to one embodiment disclosed herein.

Referring to FIG. 2, the reduced injection amount of electrolyte due to the non-operation time of the injection device 100 can be confirmed. Referring to the graph illustrated in FIG. 2, it can be confirmed that the reduced amount of injection tends to increase as the non-operation time of the injection device 100 increases.

Accordingly, the process management device 1 may correct the injection amount of electrolyte according to the non-operation time of the injection device 100 so that an electrolyte is injected into the battery cell, thereby preventing defects caused by insufficient electrolyte injected into the battery cell and decreasing the defect rate.

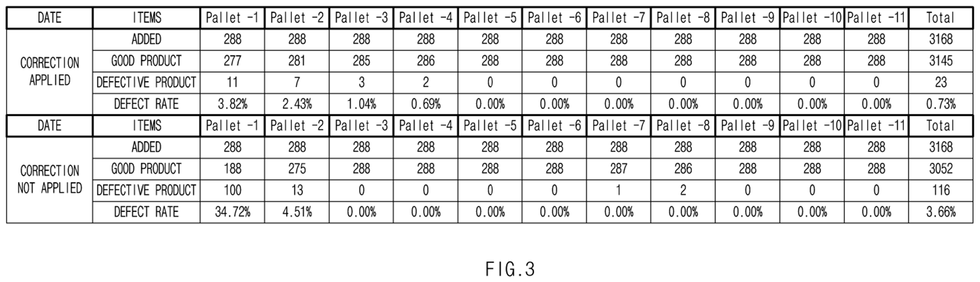

FIG. 3 is a view illustrating an example of a result of adopting a correction method according to one embodiment disclosed herein.

Referring to FIG. 3, the result of applying the correction method of the process management device 1 can be confirmed. FIG. 3 illustrates a defect rate in a case in which the correction method according to one embodiment of the present invention was applied and a defect rate in a case in which the correction method was not applied.

First, referring to the case in which the correction method is not applied in FIG. 3, it can be confirmed that a defect rate in a first pallet was quite high at 34.72% when the operation starts after the non-operation time of the injection device 100 has elapsed. This is because, as described above, as the surfaces of the nozzle, pipe, and the like dry out, some of the electrolyte to be injected into the battery cell is reduced due to adhesion and the like.

However, when the correction method of the process management device 1 is applied, it can be confirmed that the defect rate in the first pallet after the non-operation time of the injection device 100 has elapsed was significantly reduced to 3.82%.

In addition, it can be confirmed that a total of defect rates of the pallets (pallets 1 to 11) injected during one cycle of the injection device 100 also significantly decreased from 3.77% to 0.73% in comparison to before the correction method was applied.

That is, the process management device 1 can significantly reduce the defect rate according to the non-operation time of the injection device 100 by controlling the amount of electrolyte injected into the battery cell considering the non-operation time of the injection device 100.

FIG. 3 illustrates that 288 battery cells are positioned in each pallet and 11 pallets are added during one cycle of the injection device 100, but the number of battery cells positioned in each pallet and the number of pallets injected during one cycle of the injection device 100 are not limited thereto.

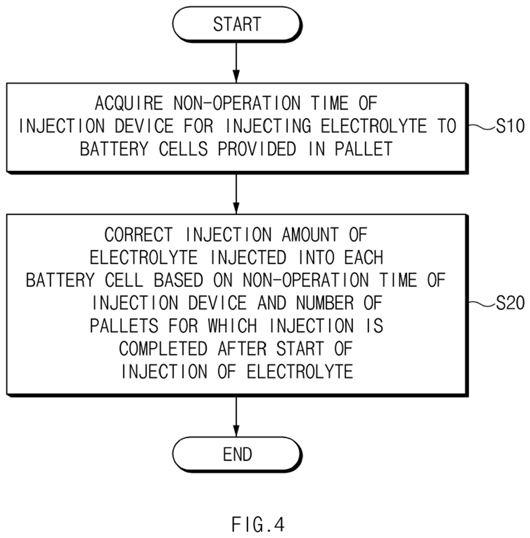

FIG. 4 is a flowchart for describing a process management method according to one embodiment disclosed herein.

Referring to FIG. 4, the process management method may include acquiring a non-operation time of an injection device for injecting an electrolyte into battery cells provided in a pallet (S10), and correcting the amount of electrolyte injected into each battery cell based on the non-operation time of the injection device and the number of pallets for which injection is completed after the start of electrolyte injection (S20).

In operation S10, the controller 200 may acquire the non-operation time of the injection device 100. For example, the controller 200 may calculate a difference between a time point at which the operation of the injection device 100 starts (e.g., a time point at which the injection of the electrolyte starts) and a time point at which the previous operation of the injection device 100 is completed (e.g., a time point at which the electrolyte is lastly injected into the pallet) as the non-operation time.

In operation S20, the controller 200 may correct the injection amount of the electrolyte injected from the injection device 100 into each battery cell. In an embodiment, the controller 200 may correct the injection amount of the electrolyte based on the non-operation time of the injection device 100 and the number of pallets for which injection is completed.

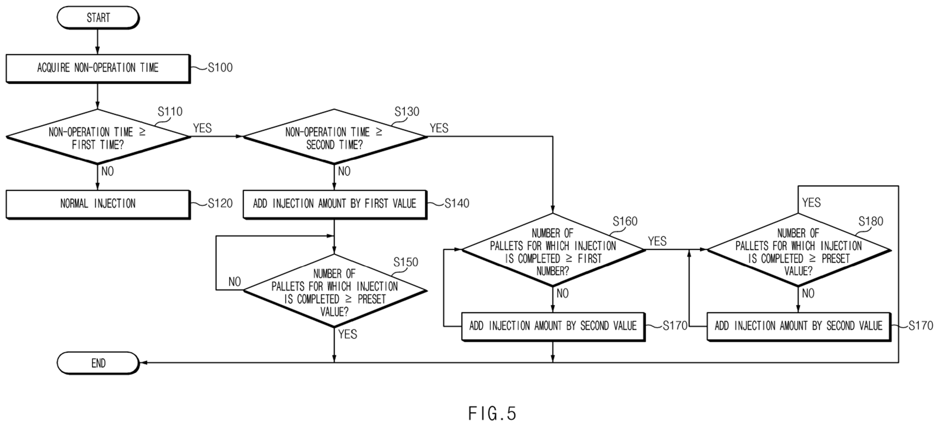

FIG. 5 is a flowchart for describing a process of correcting an injection amount of electrolyte according to one embodiment disclosed herein.

Referring to FIG. 5, the process management device 1 may correct the injection amount of electrolyte based on the non-operation time of the injection device 100 and the number of pallets for which injection is completed.

In operation S100, the controller 200 may acquire the non-operation time of the injection device 100. The controller 200 may determine whether to correct the injection amount of the electrolyte and the correction amount of electrolyte according to the non-operation time of the injection device 100.

In operation S110, the controller 200 may determine whether the non-operation time of the injection device 100 is a first time or longer. When the non-operation time of the injection device 100 is shorter than the first time (No in S110), the process may proceed to operation S120. When the non-operation time of the injection device 100 is the first time or longer (Yes in S110), the process may proceed to operation S130.

In operation S120, the controller 200 may perform normal injection without correcting the injection amount of electrolyte injected into each battery cell. Here, the "normal injection" may mean that the injection device 100 injects a preset amount of electrolyte into each battery cell.

In operation S130, the controller 200 may determine whether the non-operation time of the injection device 100 is a second time or longer. When the non-operation time of the injection device 100 is shorter than the second time (No in S130), the process may proceed to operation S140. When the non-operation time of the injection device 100 is the second time or longer (Yes in S130), the process may proceed to operation S160.

In operation S140, the controller 200 may correct the injection amount of electrolyte of the injection device 100 to be added by a first value.

In operation S150, the controller 200 may count the number of pallets for which injection is completed. The controller 200 may determine whether the number of pallets for which injection is completed is a preset value or more. When the number of pallets for which injection is completed is less than the preset value, the injection according to the corrected injection amount may be continuously performed. In this case, the number of pallets for which injection is completed may be increased by 1 each time the electrolyte injection into the pallet is completed.

The controller 200 may finish the procedure when the number of pallets for which injection is completed reaches the preset value.

In operation S160, the controller 200 may determine whether the number of pallets for which injection is completed is a first number or more. When the number of pallets for which injection is completed is less than the first number (No in S160), the process may proceed to operation S170. When the number of pallets for which injection is completed is the first number or more (Yes in S160), the process may proceed to operation S180.

In operation S170, the controller 200 may correct the injection amount of electrolyte of the injection device 100 to be added by a second value.

In operation S180, the controller 200 may determine whether the number of pallets for which injection is completed is the preset value or more. When the number of pallets for which injection is completed is less than the preset value (No in S180), the process may proceed to operation S190. In this case, the number of pallets for which injection is completed may be increased by 1 each time the electrolyte injection into the pallet is completed.

In operation S190, the controller 200 may correct the injection amount of electrolyte of the injection device 100 to be added by a third value.

The process management device 1 can prevent defects caused by insufficient electrolyte injection by correcting the injection amount of electrolyte according to the non-operation time of the injection device 100 in this way.

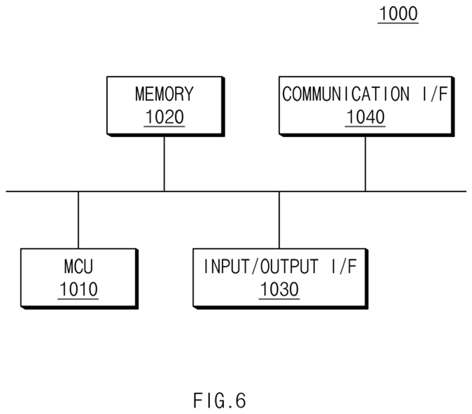

FIG. 6 is a block diagram illustrating a hardware configuration of a computing system for performing a method of operating a process management device according to one embodiment disclosed herein.

Referring to FIG. 6, a computing system 1000 according to one embodiment disclosed in this document may include a micro controller unit (MCU) 1010, a memory 1020, an input/output I/F 1030, and a communication I/F 1040.

The MCU 1010 may be a processor for executing various programs (e.g., programs for correcting an injection amount) stored in the memory 1020, processing various types of information through these programs, and allowing the functions of a controller included in the above-described process management device illustrated in FIG. 1 to be performed.

The memory 1020 may store various types of programs such as an injection amount correction program. In addition, the memory 1020 may store various types of information such as the result of correction.

The memory 1020 may be provided as a plurality of memories as needed. The memory 1020 may be a volatile memory or a non-volatile memory. As the memory 1020 of the volatile memory, a RAM, a DRAM, a SRAM, etc. can be used. As the memory 1020 of the non-volatile memory, a ROM, a PROM, an EAROM, an EPROM, an EEPROM, a flash memory, etc. can be used. Examples of the above-listed memories 1020 are merely illustrative and are not limited to these examples.

The input/output I/F 1030 may be an interface for connecting an input device (not shown), such as a keyboard, a mouse, or a touch panel, and an output device, such as a display (not shown) with the MCU 1010 and allowing the input and output devices and the MCU 1010 to transmit and receive data.

The communication I/F 1040 is a component capable of transmitting and receiving various data to and from the server and may be various devices capable of supporting wired or wireless communication.

As described above, the computer program according to one embodiment disclosed herein may be implemented as a module for performing the functions shown in FIG. 1, for example, by being recorded in the memory 1020 and processed by the MCU 1010.

As described above, although all the components constituting the embodiments disclosed herein were described as being coupled or operated by being coupled, the embodiments disclosed herein are not necessarily limited to these embodiments. In other words, one or more of all the components may be operated by being selectively coupled without departing from the scope of the purpose of the embodiments disclosed herein.

In addition, the terms such as "comprise," "constitute," or "have" described above mean that the corresponding component may be inherent unless otherwise stated, and thus should be construed as further including another component rather than excluding another component. All terms including technical or scientific terms have the same meaning as commonly understood by those skilled in the art to which the embodiments disclosed herein pertain unless defined otherwise. Commonly used terms, such as terms defined in a dictionary, should be construed as consistent with the contextual meaning of the related art and are not construed in an ideal or excessively formal meaning unless explicitly defined herein.

The above description is merely the exemplary description of the technical spirit disclosed herein, and those skilled in the art to which embodiments disclosed herein pertain will be able to variously modify and change the present document without departing from the essential characteristics of the embodiments disclosed herein. Therefore, the embodiments disclosed herein are not intended to limit the technical spirit disclosed herein, but for illustrative purpose, and the scope of the technical spirit disclosed herein is not limited by these embodiments. The scope of the technical spirit disclosed herein should be construed by the appended claims, and all technical spirits within the equivalent range should be construed as being included in the scope of this document.

## Claims

1. A process management device comprising:
an injection device configured to inject an electrolyte to battery cells provided in a pallet; and
a controller configured to correct an injection amount of electrolyte injected into each of the battery cells based on a non-operation time of the injection device and the number of pallets for which injection is completed after the start of the injection of the electrolyte.

2. The process management device of claim 1, wherein the controller performs the correction when the non-operation time of the injection device is a first time or longer and until the number of pallets for which injection is completed reaches a preset value.

3. The process management device of claim 2, wherein the preset value is set to the number of pallets included in one cycle in which the injection device injects the electrolyte.

4. The process management device of claim 2, wherein the controller adds the injection amount of electrolyte by a first value when the non-operation time of the injection device is the first time or longer and shorter than a second time

5. The process management device of claim 2, wherein, when the non-operation time of the injection device is a second time or longer, the controller corrects the injection amount of electrolyte based on the number of pallets for which the injection is completed.

6. The process management device of claim 5, wherein the controller is configured to:
add the injection amount of electrolyte by a second value when the number of pallets for which the injection is completed is less than a first number; and
add the injection amount of electrolyte by a third value when the number of pallets for which the injection is completed is the first number or more and less than the preset value.

7. The process management device of claim 1, wherein the injection amount of electrolyte to be corrected is determined based on the non-operation time of the injection device.

8. A process management method comprising:
acquiring a non-operation time of an injection device configured to inject an electrolyte to battery cells provided in a pallet; and
correcting an injection amount of electrolyte injected into each of the battery cells based on the non-operation time of the injection device and the number of pallets for which injection is completed after the start of the injection of the electrolyte.

9. The process management method of claim 8, wherein the correcting of the injection amount of electrolyte includes performing the correction when the non-operation time of the injection device is a first time or longer and until the number of pallets for which injection is completed reaches a preset value.

10. The process management method of claim 9, wherein the correcting of the injection amount of electrolyte includes adding the injection amount of electrolyte by a first value when the non-operation time of the injection device is the first time or longer and shorter than a second time.

11. The process management method of claim 9, wherein the correcting of the injection amount of electrolyte includes correcting the injection amount of electrolyte based on when the non-operation time of the injection device is a second time or longer and the number of pallets for which the injection is completed.

12. The process management method of claim 11, wherein the correcting of the injection amount of electrolyte includes:
adding the injection amount of electrolyte by a second value when the number of pallets for which the injection is completed is less than a first number; and
adding the injection amount of electrolyte by a third value when the number of pallets for which the injection is completed is the first number or more and less than the preset value.
